# EUROPEAN PATENT SPECIFICATION

(11) **EP 4 200 767 B1**
(45) Date of publication and mention of the grant of the patent: **09.12.2026**
(21) Application number: 22713808.8
(22) Date of filing: 10.03.2022
(51) Int. Cl.: G06N 10/60, G06N 10/20, G06N 10/70, G06N 3/045, G06N 3/0475, G06N 3/094, G06N 3/084

(54) **QUANTUM GENERATIVE ADVERSARIAL NETWORKS WITH PROVABLE CONVERGENCE**
QUANTEN-GENERATIVE KONTRADIKTORISCHE NETZWERKE MIT NACHWEISBARER KONVERGENZ
RÉSEAUX ANTAGONISTES GÉNÉRATIFS QUANTIQUES À CONVERGENCE PROUVABLE

(30) Priority: 12.03.2021 US 202163160587 P
(43) Date of publication of application: 28.06.2023
(73) Proprietor: Google LLC, Mountain View, CA 94043 (US)
(72) Inventor: NIU, Yuezhen, Mountain View, California 94043 (US); NEVEN, Hartmut, Mountain View, California 94043 (US); SMELYANSKIY, Vadim, Mountain View, California 94043 (US); BOIXO CASTRILLO, Sergio, Mountain View, California 94043 (US)
(74) Representative: Varley, James Richard
(86) International application number: PCT/US2022/019796
(87) International publication number: WO 2022/192568

(56) References cited:
- SAMUEL A STEIN ET AL: "QuGAN: A Generative Adversarial Network Through Quantum States", ARXIV.ORG, CORNELL UNIVERSITY LIBRARY, 201 OLIN LIBRARY CORNELL UNIVERSITY ITHACA, NY 14853, 18 October 2020 (2020-10-18), XP081790075
- LLOYD SETH ET AL: "Quantum Generative Adversarial Learning", PHYSICAL REVIEW LETTERS, vol. 121, no. 4, 26 July 2018 (2018-07-26), US, XP055857821, ISSN: 0031-9007, DOI: 10.1103/PhysRevLett.121.040502
- PIERRE-LUC DALLAIRE-DEMERS ET AL: "Quantum generative adversarial networks", PHYSICAL REVIEW A, vol. 98, no. 1, 23 July 2018 (2018-07-23), pages 012324, XP055710380, ISSN: 2469-9926, DOI: 10.1103/PhysRevA.98.012324
- LI PANCHI ET AL: "Quantum neural networks model based on swap test and phase estimation", NEURAL NETWORKS., vol. 130, 8 July 2020 (2020-07-08), GB, pages 152 - 164, XP055932439, ISSN: 0893-6080, DOI: 10.1016/j.neunet.2020.07.003
- MARCELLO BENEDETTI ET AL: "Parameterized quantum circuits as machine learning models", QUANTUM SCIENCE AND TECHNOLOGY, vol. 4, no. 4, 13 November 2019 (2019-11-13), pages 043001, XP055710377, ISSN: 2058-9565, DOI: 10.1088/2058-9565/ab4eb5
- SUGURU ENDO ET AL: "Hybrid quantum-classical algorithms and quantum error mitigation", ARXIV.ORG, CORNELL UNIVERSITY LIBRARY, 201 OLIN LIBRARY CORNELL UNIVERSITY ITHACA, NY 14853, 2 November 2020 (2020-11-02), XP081805880

## Description

### BACKGROUND

This specification relates to quantum computing and generative adversarial networks.

Classical computers have memories made up of bits, where each bit can represent either a zero or a one. Quantum computers maintain sequences of quantum bits, called qubits, where each quantum bit can represent a zero, one or any quantum superposition of zeros and ones. Quantum computers operate by setting qubits in an initial state and controlling the qubits, e.g., according to a sequence of quantum logic gates.

Generative adversarial networks are a form of generative machine learning, achieving state-of-the-art performance in a variety of high-dimensional and complex tasks including photorealistic image generation, super-resolution, and molecular synthesis. Given access only to a training dataset S = {*xᵢ*} sampled from an underlying data distribution *p_{data}*(*x*)*,* a GAN can generate realistic examples outside S. Some probability distributions are classically hard to sample from and therefore learning a precise representation of an arbitrary distribution *p_{data}*(*x*) can benefit from access to a quantum computing resource.

On 18 October 2020, Stein et al. (QuGAN: a generative adversarial network through quantum states; arXiv:2010.09036v1; doi:10.48550/arXiv.2010.09036) observed that, though GANs are computationally expensive and their training may suffer from convergence failure or mode collapse, GANs have been widely used for generating data across various areas. Aiming at the acceleration for practical quantum computers, they proposed QuGAN, a quantum GAN architecture that provides stable convergence, quantum-states based gradients and significantly reduced parameter sets, by running both the discriminator and the generator purely on quantum state fidelity and utilizing the swap test on qubits to calculate the values of quantum-based loss functions.

"Quantum generative adversarial learning" (S. Lloyd and C. Weedbrook, Phys. Rev. Lett. 121, 040502 (2018)) discloses the notion of quantum generative adversarial networks (QuGANs), where the data consists either of quantum states, or of classical data, and the generator and discriminator are equipped with quantum information processors.

"Quantum generative adversarial networks" (P. Dallaire-Demers and N. Killoran, Phys. Rev. A 98, 012324 (2018)) discloses an example of a simple practical circuit ansatz to parametrize quantum machine learning models and perform a simple numerical experiment to demonstrate that quantum generative adversarial networks can be trained successfully.

"Quantum neural networks model based on swap test and phase estimation" (P. Li and B. Wang, Neural Networks Volume 130, October 2020, Pages 152-164) discloses a neural networks model for a quantum computer. The core of this model is quantum neuron. Firstly, the inner product of the input qubits and the weight qubits is mapped to the phase of the control qubits in the neuron by the swap test technology, and then these phases are obtained by the phase estimation method, which are further used as the phase of the output qubit in the neuron. In this way, the mapping of input qubits to output qubit in quantum neuron is completed.

### SUMMARY

The invention is defined in the appended claims.

This specification describes quantum generative adversarial networks with provable convergence.

One innovative aspect of the subject matter described in this specification is a method for training a quantum generative adversarial network to learn a target quantum state, the method being performed by one or more quantum computers, each comprising a plurality of physical qubits, and by one or more classical processors, the method comprising: iteratively adjusting parameters of the quantum generative adversarial network until a value of a quantum generative adversarial network loss function converges, wherein the quantum generative adversarial network comprises a generator network comprising quantum hardware of the one or more quantum computers that is configured to apply a first parameterized quantum circuit to an initial quantum state to output a first quantum state that approximates the target quantum state, and a discriminator network comprising quantum hardware of the one or more quantum computers that is configured receive a discriminator input and perform an entangling operation on the discriminator input by applying a second parameterized quantum circuit to the discriminator input; wherein each iteration comprises: performing, by the quantum hardware of the one or more quantum computers, an entangling operation on the discriminator network input of the discriminator network in the quantum generative adversarial network to measure a fidelity of the discriminator network input, wherein the discriminator network input comprises the target quantum state and a first quantum state output from a generator network in the quantum generative adversarial network; and performing, by the one or more classical processors, a minimax optimization of the quantum generative adversarial network loss function to update the parameters of the quantum generative adversarial network, wherein the quantum generative adversarial network loss function is dependent on the measured fidelity of the discriminator network input.

Other implementations of these aspect include corresponding computer systems, apparatus, and computer programs recorded on one or more computer storage devices, each configured to perform the actions of the methods. A system of one or more classical and/or quantum computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination. In some implementations the value of the quantum generative adversarial network loss converges to a Nash equilibrium.

In some implementations each iteration further comprises: processing, by the generator network, an initial quantum state to output the first quantum state, the processing comprising applying a first quantum circuit to the initial quantum state, wherein i) the first quantum circuit is a parameterized quantum circuit and first quantum circuit parameters constitute generator network parameters included in the parameters of the quantum generative adversarial network.

In some implementations the first quantum circuit has a lower circuit depth than a quantum circuit used to produce the target quantum state.

In some implementations the entangling operation comprises a parameterized entangling operation that approximates a swap test.

In some implementations the entangling operation comprises an ancilla-free swap test.

In some implementations the ancilla-free swap test approximates an exact swap test and comprises a second quantum circuit, wherein the second quantum circuit is a parameterized quantum circuit and second quantum circuit parameters constitute discriminator network parameters included in the parameters of the quantum generative adversarial network.

In some implementations the quantum generative adversarial network loss function comprises one minus the measured fidelity of the discriminator network input.

In some implementations performing the minimax optimization of the quantum generative adversarial network loss function comprises: fixing generator network parameters to values determined at a previous iteration and maximizing the quantum generative adversarial network loss function with respect to discriminator network parameters to determine updated values of the discriminator network parameters for the iteration; and fixing the discriminator network parameters to the updated values of the discriminator network parameters for the iteration and minimizing the quantum generative adversarial network loss function with respect to generator network parameters to determine updated values of the generator network parameters for the iteration.

In some implementations the method further comprises fixing the discriminator network parameters to values corresponding to a perfect swap test and minimizing the quantum generative adversarial network loss function with respect to generator network parameters to determine initial updated values of the generator network parameters for the iteration; fixing generator network parameters to the initial updated values and maximizing the quantum generative adversarial network loss function with respect to discriminator network parameters to determine updated values of the discriminator network parameters for the iteration; and fixing the discriminator network parameters to the updated values of the discriminator network parameters for the iteration and minimizing the quantum generative adversarial network loss function with respect to generator network parameters to determine updated values of the generator network parameters for the iteration.

In some implementations the target quantum state comprises a superposition state and wherein the method further comprises generating, by the generator network and according to trained generator network parameters, the target quantum state to approximate a quantum random access memory.

In some implementations the method further comprises training a quantum neural network using the generated target quantum state.

In some implementations iteratively adjusting the parameters of the quantum generative adversarial network until a value of the quantum generative adversarial network loss function converges produces trained generator network and discriminator network parameters, and wherein the method further comprises generating the target state using the generator network and according to the trained generator network parameters.

In some implementations performing a minimax optimization of the quantum generative adversarial network loss function to update the parameters of the quantum generative adversarial network comprises performing multiple circuit evaluations to compute gradients of the parameters of the quantum generative adversarial network.

The subject matter described in this specification can be implemented in particular ways so as to realize one or more of the following advantages.

The presently described entangling quantum generative adversarial network (EQ-GAN) is proven to converge to the global optimal Nash equilibrium and converges on problem instances that conventional quantum generative adversarial networks (QGAN) fail on.

In addition, the task of learning a quantum circuit to generate an unknown quantum state can also be solved in an entirely supervised approach. Rather than adversarially training the discriminator to distinguish between fake and real data, the discriminator can be frozen to perform an exact swap test, measuring the state fidelity between the true and fake data. While this would replicate the original state in the absence of noise, gate errors in the implementation of the discriminator will cause convergence to the incorrect optimum. It is shown that the adversarial approach of the EQ-GAN is more robust to such errors than the simpler supervised learning approach. Since training quantum machine learning models can require extensive time to compute gradients on current quantum hardware, resilience to gate errors drifting during the training process is especially valuable in the noisy intermediate-scale quantum (NISQ) era of quantum computing.

In addition, applications of the EQ-GAN in the broader context of quantum machine learning for classical data are provided. Most quantum machine learning algorithms that promise exponential speedup over classical counterparts require a quantum random access memory (QRAM). By learning a shallow quantum circuit to generate a superposition of classical data, an EQ-GAN can be used to create an approximate QRAM. It can be shown that the application of such a QRAM for quantum neural networks increase the accuracy of classification of a quantum neural network under the same amount of training time over that using a classical data set. Once trained, the quantum neural network can easily be inverted to provide interpretability of its classification process. EQ-GAN provides a new paradigm of loading classical data into quantum state prepared by shallow quantum circuit through variational circuit optimization.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a graph showing the performance of a conventional quantum generative adversarial network.
FIG. 2 depicts an example entangling quantum generative adversarial network..
FIG. 3 is a flow chart of an example process for training a quantum generative adversarial network to learn a target quantum state, the quantum generative adversarial network including a generator network and a discriminator network.
FIG. 4A shows a circuit diagram showing an example EQ-GAN discriminator architecture.
FIG. 4B shows an example representation of a unitary operator.
FIG. 5 shows a circuit diagram of an ancilla-free swap test between two 3-qubit states.
FIG. 6 shows a graph showing a comparison of a QGAN and the presently described EQ-GAN learning a quantum state.
FIG. 7 shows a first graph plotting comparison of EQ-GAN and a supervised learner implemented on a simulated quantum device and a second graph plotting a comparison of EQ-GAN and a supervised learner implemented on a physical quantum device.
FIG. 8 shows two variational QRAM ansatzes for generating peaks.
FIG. 9 shows a two-peak total dataset and variational QRAM of the training dataset.
FIG. 10 shows an example quantum neural network architecture and its corresponding layout on a physical device.
FIG. 11 shows a decomposition of a rank-4 two-qubit entangling gate.
FIG. 12 shows an example system.

Like reference numbers and designations in the various drawings indicate like elements.

### DETAILED DESCRIPTION

A generative adversarial network (GAN) includes a parameterized generator network *G*(*θ_{g},* z) and a parameterized discriminator network *D*(*θ_{d}*; *z*)*.* The generator transforms a vector sampled from an input distribution *z* ~ *p*₀(*z*) to a data example *G*(*θ_{g}, z*)*,* thus transforming *p*₀(*z*) to a new distribution *p_{g}*(*z*) of fake data. The discriminator takes an input sample x and gives the probability *D*(*θ_{d}*; *z*) that the sample is real (from the data) or fake (from the generator network). The training corresponds to a minimax optimization problem, where alternations between improving the discriminator's ability to distinguish real/fake samples and improving the generator's ability to fool the discriminator are implemented. For example, min max *V*(*θ_{g}*, *θ_{d}*) is solved for a cost function V given by Equation (1) below. $V \left({θ}_{g}, {θ}_{d}\right) = {E}_{x ∼ {p}_{data} \left(z\right)} \left[log D\left({θ}_{d}, x\right)\right] + {E}_{z ∼ {p}_{0} \left(z\right)} \left[log\left(1-D\left({θ}_{d},G\left({θ}_{g}, z\right)\right)\right)\right]$ (1) In Equation (1), *θ_{g}* represents the generator network parameters, *θ_{d}* represents the discriminator network parameters, *p_{data}*(*z*) represents the real data distribution, and *p*₀(*z*) represents the input distribution.

If G *and D* have enough capacity, e.g., approach the space of arbitrary functions, then it is proven that a global optimum of this minimax game exists and uniquely corresponds to *p_{g}*(*x*) = *p_{data}*(*x*). While a multilayer perceptron can be used to parameterize *D* and *G*, the dimensionality of the functional space can also be increased by replacing classical neural networks with quantum neural networks. In the most general case, the classical data can be represented by a density matrix *σ* = Σ*ᵢpᵢ*|*ψᵢ*〉〈*ψᵢ*| where *pᵢ* ∈ [0, 1] represent positive bounded
real numbers and |*ψᵢ*〉 are orthogonal basis states. In the first proposal of a quantum GAN (QGAN) the generator network is defined by a quantum circuit *U* that outputs the quantum state *ρ = U*(*θ_{g}*)*ρ*₀*U*^{†}(*θ_{g}*) from the initial state *ρ*₀. The discriminator takes either the real data *σ* or the fake data p and performs a positive operator valued measurement (POVM) to return either
the true data operator T or fake data operator F, with ||*T*||₁, ||*F*||₁ ≤ 1. Hence, the probability that an arbitrary state *ρᵢₙ* is true data is given by $D \left({θ}_{d}, {ρ}_{in}\right) = Tr \left[{Tρ}_{in}\right]$ (2)

The QGAN solves a min-max game, for example given by Equation (3) below. ${min}_{{θ}_{g}} {max}_{T} \left(Tr\left[Tσ\right]-Tr\left[Tρ\left({θ}_{g}\right)\right]\right)$ (3)

Since the set of positive operators with 1-norm less than or equal to one is convex and compact, gradient descent can be used to optimize the discriminator's measurement.
The optimal discriminator measurement is given by the Helstrom measurement, where operators
*P⁺*(*σ - ρ*) and *1 - P⁺*(*σ - ρ*) distinguish between the positive and negative part of *σ - ρ.* That is, given the expansion into strictly positive eigenvalues $\left\{{λ}_{i}^{+}\right\}$ and strictly negative eigenvalues $\left\{{λ}_{i}^{-}\right\}$ (with corresponding eigenstates $\left|{ϕ}_{i}^{+}\right〉$ and $\left|{ϕ}_{i}^{-}\right〉$) $σ - ρ = {\sum }_{i} {λ}_{i}^{+} \left|{ϕ}_{i}^{+}\right〉 \left〈{ϕ}_{i}^{+}\right| + {\sum }_{i} {λ}_{i}^{-} \left|{ϕ}_{i}^{-}\right〉 \left〈{ϕ}_{i}^{-}\right|$ (4) the optimal discriminator will choose $T = {P}^{+} \left(σ-ρ\right) = {\sum }_{i} \left|{ϕ}_{i}^{+}\right〉 \left〈{ϕ}_{i}^{+}\right| and F = 1 - {P}^{+} \left(σ-ρ\right)$ *.* To reach a Nash equilibrium from *D*(*θ_{d}, σ*) *- D*(*θ_{d}, ρ*(*θ_{g}*)) = Tr[*Tσ*] - Tr[*Tρ*(*θ_{g}*)] *>* 0, the generator must modify *θ_{g}* such that Tr[*Tρ*(*θ_{g}*)] will increase. While some methods propose updating *ρ* → *ρ' = ρ + α*(*σ - ρ*) for *α* > 0 by minimizing Equation (3), this strategy does not yield the Nash equilibrium. Evaluating the trace with the T operator aligns the generated data only to the positive projection of *σ - ρ.* This ultimately causes mode collapse, as shown in the below example.

Consider a true data state *σ* and a generator initialized in state p, where each state is defined by $σ = \frac{1 + cos \left(\frac{π}{6}\right) {σ}^{x} + sin \left(\frac{π}{6}\right) {σ}^{y}}{2}$ (5) $ρ = \frac{1 + cos \left(\frac{π}{6}\right) {σ}^{x} - sin \left(\frac{π}{6}\right) {σ}^{y}}{2}$ (6) where *σ^{x}* represents Pauli operator x and *σ^{y}* represents Pauli operator y. Maximizing Equation (3) with a Helstrom measurement by decomposing *σ - σ = σ^{y}*/2, the discriminator will take $T = {P}^{+} \left(σ-ρ\right) = \frac{1 + {σ}^{y}}{2}$_{.} Optimizing over the space of density matrices, the generator will rotate *p* to be parallel to *T,* also giving $ρ ′ = \frac{1 + {σ}^{y}}{2} 2$. In the next iteration, the discriminator attempts to perform a new Helstrom measurement to distinguish *σ* from p', but this results in *T' = P*⁺(*σ - ρ'*) *= ρ.* As the generator realigns to match the new measurement operator, *p" = p.* It is now straightforward to see that if the QGAN is trained to fully solve the minimax optimization problem each iteration, it will never converge. Instead, it will always oscillate between states *p'* and *p,* neither of which are the Nash equilibrium of the minimax game for the QGAN performance under such mode-collapse.

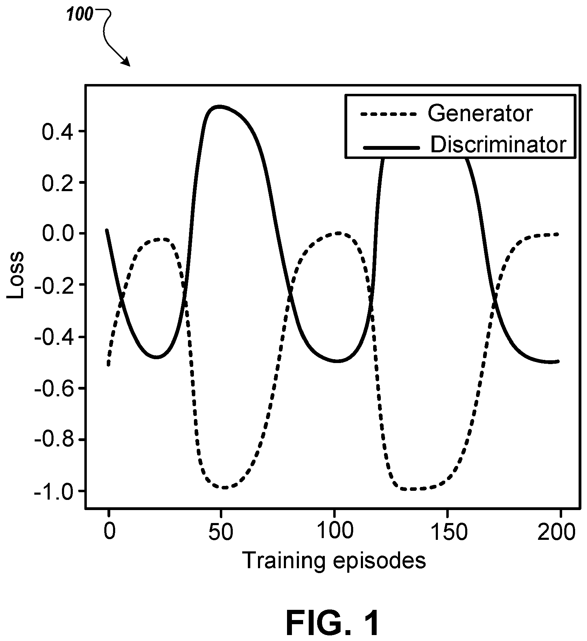

FIG. 1 is a graph 100 showing the performance of a conventional QGAN learning the state defined in Equation (5) with initialization given by Equation (6). The x-axis shows the number of training episodes. The y-axis shows loss. Graph 100 shows that mode collapse manifests as an oscillation in the generator and discriminator loss without converging to a global optimum.

More generally, consider the oscillation between a finite set of states. Let the function *Tσ*(*ρ*) *= P⁺*(*σ - p)* denote the optimal Helstrom measurement ${P}^{+} = {\sum }_{i} \left|{ϕ}_{i}^{+}\right〉 \left〈{ϕ}_{i}^{+}\right|$ obtained from the positive part of the spectral decomposition of *σ - ρ* in Equation (4). If ${T}_{σ}^{\left(k\right)}$ is the k-fold composition of *T* with itself, then the existence of some *k >* 1 such that *T*^{(*k*)} *= ρ* is sufficient to ensure oscillation between *k* states. For a system of n qubits, this can be achieved by preparing the target and initial state separated by an angle of *π*/3 on the generalized Bloch sphere.

While this issue is only consistently present when the discriminator of the QGAN is allowed to converge to a Helstrom measurement during training, it may cause the QGAN architecture to be more sensitive to choice of hyper parameters, particularly the learning rate and number of epochs for which the discriminator and generator are trained each iteration. In the case of fully training the QGAN discriminator and generator, mode collapse results in a fidelity of 3/4 shared by both *p* and *p'* and hence constant throughout oscillation. However, even in the regime of a standard learning rate and only one epoch per iteration, the QGAN oscillates in the beginning of training. Unstable training is difficult to overcome even in classical GAN architectures, and thus advances in understanding how to prevent such non-convergence are consequential for both quantum and classical machine learning.

This specification describes a new quantum GAN that does not experience the mode collapse described above and therefore provides a more robust QGAN architecture. The new quantum GAN is an entangling QGAN (referred to herein as EQ-GAN) that, instead of providing the discriminator with either true or fake data, entangles both true and fake data.

### Example operating environment

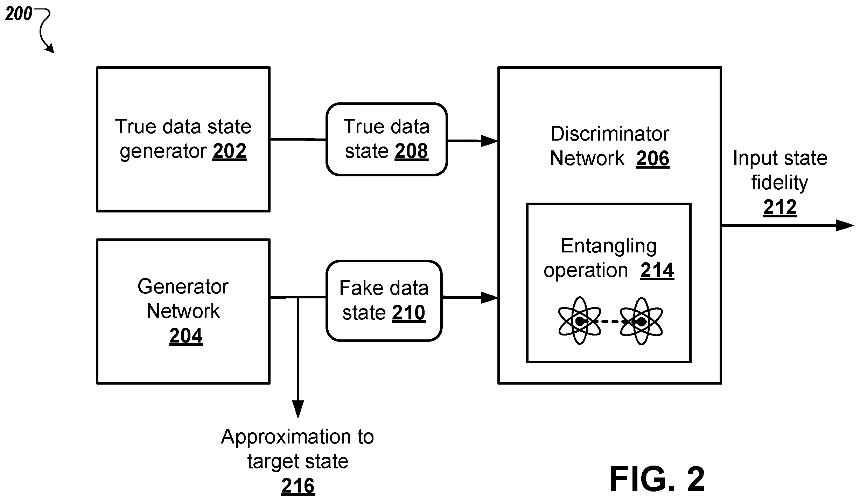

FIG. 2 is a block diagram of an entangling quantum generative adversarial network (EQ-GAN) 200.

The EQ-GAN 200 includes a true data state generator 202. The true data state generator 202 includes quantum hardware that is configured to produce a target quantum state, e.g., true data state 208. In some implementations the true data state generator 202 can prepare the target quantum state by applying a quantum circuit to an initial quantum state. In some cases, e.g., cases where the target quantum state is a superposition of classical data, a quantum circuit needed to produce a particular target quantum state can include quantum logic gates that are expensive to implement and/or can have a large circuit depth. Therefore, producing a large number of the target quantum state can be inefficient or infeasible.

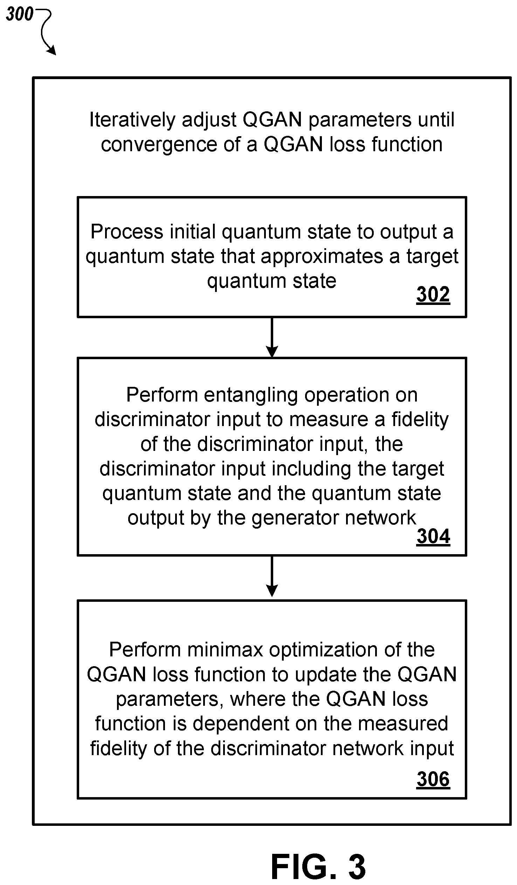

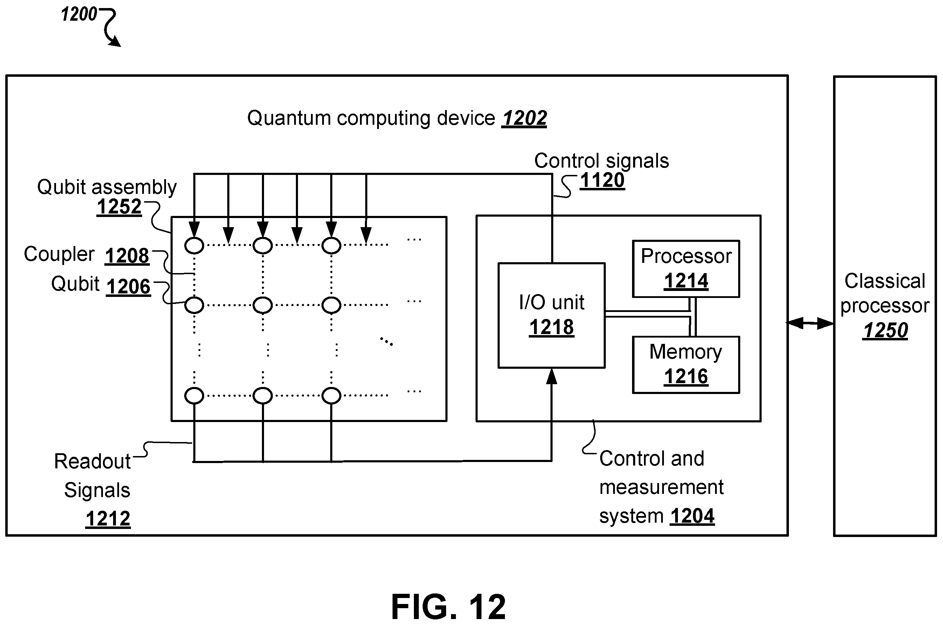

The EQ-GAN 200 also includes a generator network 204. The generator network 204 is configured to generate quantum states that approximate the target quantum state, e.g., fake data state 210. For example, as described in more detail below, the generator network can include quantum computing hardware that is configured to apply a parameterized quantum circuit to an initial quantum state to output a quantum state that approximates the target quantum state. The parameterized quantum circuit can have a lower circuit depth compared to the quantum circuit implemented by the true data state generator 202 to produce the exact target quantum state. Therefore, training the generator network 204 by adjusting the parameterized quantum circuit parameters until a value of a EQ-GAN loss function converges can enable the generator network 204 to produce accurate approximations of the target quantum state with lower computational costs. Example operations performed by the generator network 204 are described in more detail below with reference to FIGS. 3-11. Example hardware included in the generator network 204 is described in more detail below with reference to FIG. 12.

The EQ-GAN 200 also includes a discriminator network 206. The discriminator network 206 is configured to receive a discriminator network input and perform an entangling operation 214 on the discriminator network input to measure a fidelity 212 of the discriminator network input. The discriminator network input includes a true data state 208 obtained from true data state generator 202 and a fake data state 210 output from a generator network 204. That is, the discriminator network 206 is configured to entangle true and fake data states. The entangling operation is a parameterized entangling operation that approximates a swap test. In some implementations the entangling operation requires an ancilla qubit. In other implementations the entangling operation is an ancilla-free approximation to a swap test. In either case, the entangling operation can be implemented through application of a parameterized quantum circuit. Example operations performed by the discriminator network 206 are described in more detail below with reference to FIGS. 3-11. Example hardware included in the discriminator network 206 is described in more detail below with reference to FIG. 12.

The EQ-GAN 200 can be trained to enable the generator network 204 to learn a quantum circuit that generates improved approximations of the target quantum state. During training, the generation of fake data states by the generator network 204 and learning of a fidelity measurement by the discriminator network 206 are adversarially optimized until convergence criteria are satisfied. Once trained, the generator network 204 can be used to produce approximations of target quantum states 216 according to trained generator network parameters, e.g., to approximate a quantum random access memory. An example process for training a EQ-GAN to learn a target quantum state is described below with reference to FIG. 3.

### Example process for training an EQ-GAN

FIG. 3 is a flow diagram of an example process 300 for training a quantum generative adversarial network to learn a target quantum state, the quantum generative adversarial network including a generator network and a discriminator network. For convenience, the process 300 will be described as being performed by quantum hardware in communication with control electronics located in one or more locations. For example, the system 200 of FIG. 2, appropriately programmed in accordance with this specification, can perform the process 300.

The system iteratively adjusts parameters *θ_{g}*, *θ_{d}* of the quantum generative adversarial network until a value of a quantum generative adversarial network loss function converges. The quantum generative adversarial network loss function is described below with reference to Equation (8).

At each iteration, the generator network processes an initial quantum state *pₒ* to output a quantum state p (step 302). The processing can include applying a first quantum circuit U to the initial quantum state, where the first quantum circuit is a parameterized quantum circuit and includes parameters that constitute the generator network parameters *θ_{g}.* That is, the quantum state can be given by *ρ = U*(*θ_{g}*)*ρ*₀*U*^{†}(*0_{g}*) where *U*(*θ_{g}*) represents the parameterized first quantum circuit, *θ_{g}* represents the generator network parameters and *ρ*₀ represents the initial quantum state. The quantum state p approximates the target quantum state, and iteratively adjusting the generator network parameters *θ_{g}* enables the first quantum circuit to *U*(*θ_{g}*) to generate better approximations to the target quantum state. The processing is performed using the quantum hardware.

At each iteration, the discriminator network performs an entangling operation on a discriminator network input to measure a fidelity of the discriminator network input (step 304). The discriminator network input includes the target quantum state and the quantum state output from the generator network. That is, the discriminator network is not directly analogous to the discriminator of a classical GAN. Rather than evaluating either fake or true data individually, the discriminator is always provided access to the true data *σ* and performs a fidelity measurement ${D}_{σ}^{fid}$ against an input state *ρᵢₙ,* as given below in Equation (7). ${D}_{σ}^{fid} \left({ρ}_{in}\right) = {\left(Tr\sqrt{{σ}^{1 / 2} {ρ}_{in} {σ}^{1 / 2}}\right)}^{2}$ (7) This enables the quantum generative adversarial loss function to converge to a Nash equilibrium. The entangling operation is performed using the quantum hardware.

The entangling operation performed by the discriminator network is a parameterized entangling operation that approximates a swap test. A swap test is a procedure in quantum computation that is used to check how much two quantum states differ. The swap test requires an ancilla qubit, e.g., initialized in a zero state, and is performed by repeatedly: applying a Hadamard gate to the ancilla qubit, applying *CSW AP* (also referred to as a controlled-swap gate or Fredkin gate) gates over pairs of qubits from the first quantum state and second quantum state, applying a Hadamard gate to the ancilla qubit and measuring the ancilla qubit, e.g., in a Z basis, to determine how much the quantum states differ.

In some implementations the discriminator network *D_{σ}*(*θ_{d}, ρᵢₙ*) can be a parameterized quantum circuit with an ancilla qubit - as in the case of an exact swap test - where the circuit parameters constitute the discriminator network parameters. If there exist parameters ${θ}_{σ}^{opt} d$ that realize an exact swap test, i.e. ${D}_{σ} \left({θ}_{σ}^{opt}, {ρ}_{in}\right) = \frac{1}{2} + \frac{1}{2} {D}_{σ}^{fid} \left({ρ}_{in}\right)$, then *D_{σ}* is sufficiently expressive to reach the optimal discriminator during optimization. However, since a traditional swap test across two n-qubit states requires two-qubit gates that span over 2n qubits, implementation on a quantum device with local connectivity incurs prohibitive overhead in circuit depth. Therefore, in some implementations the discriminator network can be a parameterized circuit with an ancilla qubit that approximates a swap test.

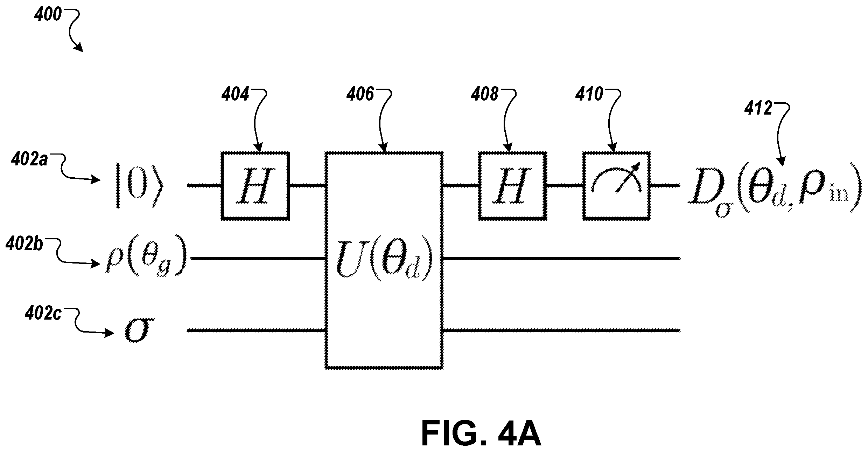

FIG. 4A is a circuit diagram 400 showing an example discriminator network architecture. The example discriminator network architecture includes three quantum states 402a-c. The first quantum state 402a is an ancilla qubit prepared in an initial state, e.g., a zero state. The second quantum state 402b is an output of the generator network *ρ*(*θ_{g}*)*,* e.g., fake data. The third quantum state 402c is a target quantum state *σ* of one or more qubits, e.g., true data.

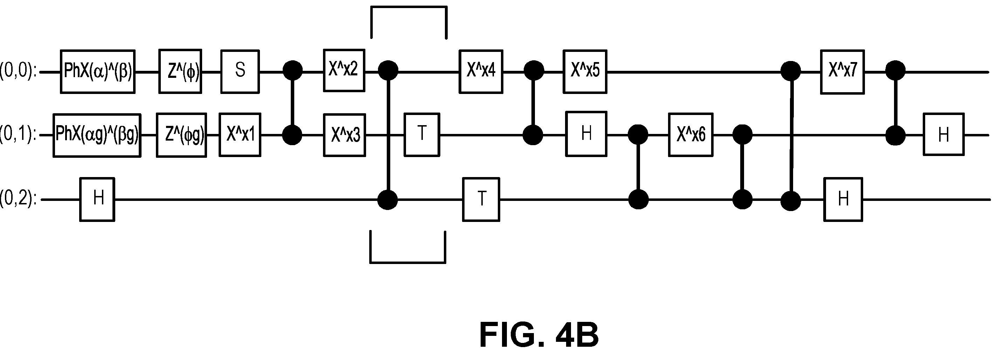

The discriminator network applies a first Hadamard gate 404 to the ancilla qubit 402a and a unitary operator 406 to the ancilla qubit 402a, output of the generator network *ρ*(*θ_{g}*) and target quantum state *σ*. The unitary operator 406 is dependent on a set of discriminator parameters *θ_{d}* and approximates a swap test. The unitary operator 406 can represent a sequence of quantum logic gates and quantum logic gates included in the sequence can vary based on the size of the second and third quantum states and the particular hardware implementation. For example, in cases where the target quantum state is a single qubit state and the output of the generator network is a single qubit state, the sequence of quantum logic gates could include single qubit rotation gates, S gates, T gates, Hadamard gates, Pauli-X gates and CZ gates. A circuit representation of an example unitary operator 406 is shown in FIG. 4B. In FIG. 4B, X1-X7 represent free parameters to be trained.

The discriminator network further applies a second Hadamard gate 408 to the ancilla qubit 402a and measures the ancilla qubit using a measurement operation 410 to obtain a discriminator output 412 representing a difference between the second quantum state 402b and third quantum state 402c.

To further simplify physical implementations of the discriminator network, in some implementations the discriminator network *D_{σ}*(*θ_{d}, ρᵢₙ*) can be a parameterized circuit that does not include an ancilla qubit. Instead, the discriminator network can be a parameterized circuit that performs a destructive ancilla-free (ancilla-qubit-free) approximation to a swap test.

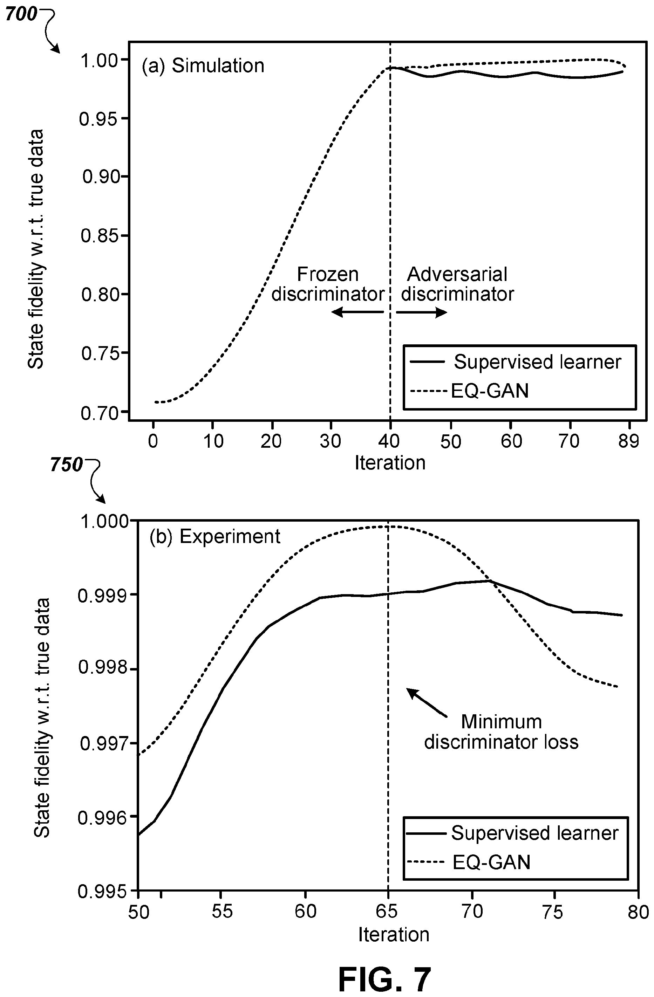

For example, for quantum device with planar connectivity CNOT gates can decomposed into (*I* ⊗ *H*)*CZ*(*I* ⊗ *H*) operations to use the native CZ gate. The CZ gate has unstable errors that can be effectively modeled with Z rotations by an unknown angle on either qubit. The presently described EQ-GAN formalism can overcome the single-qubit phase error by applying *RZ*(*θ*) gates directly after each CZ operation. During adversarial training, the free angles *θ* are optimized with gradient descent to mitigate the two-qubit gate error. Due to the convergence properties provided by the generative adversarial framework, the discriminator provably converges to the best state discriminator possible. This motivates early stopping (as shown in FIG. 7) when the discriminator loss indicates that the best state discriminator has been achieved.

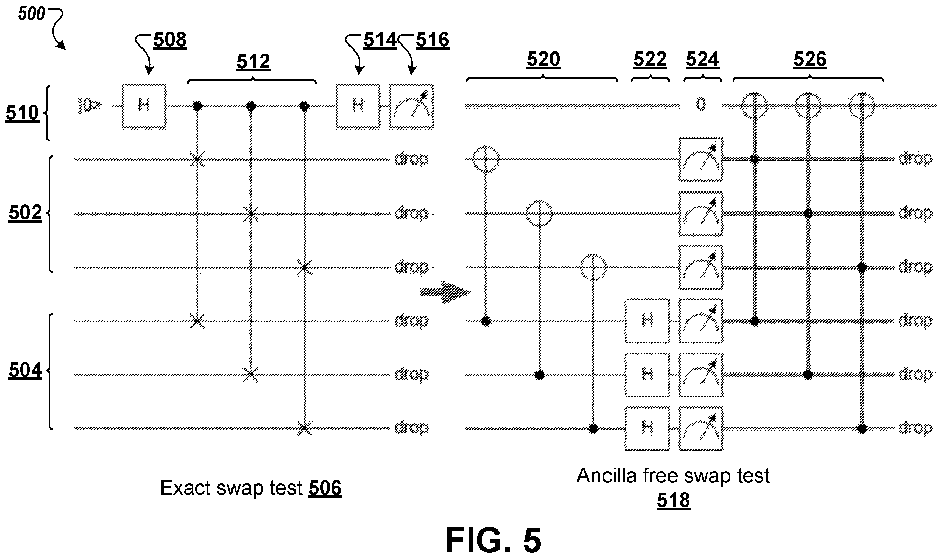

FIG. 5 is a circuit diagram 500 of an ancilla-free approximate swap test between a first 3-qubit state 502 and second 3-qubit state 504. The left hand side of the circuit diagram 500 shows the exact swap test 506. In the exact swap test a first Hadamard gate 508 is applied to the ancilla qubit 510, three *CSW AP* gates 512 are applied over pairs of qubits in the first and second 3-qubit states 502 and 504, e.g., a first CSWAP gate is applied to a first qubit in the first state 502 and a first qubit in the second state 504, a second CSW AP gate is applied to a second qubit in the first state 502 and a second qubit in the second state 504, and a third CSWAP gate is applied to a third qubit in the first state 502 and a third qubit in the second state 504, where the ancilla qubit 510 acts as a control for each *CSW AP* gate. A second Hadamard gate 514 is applied to the ancilla qubit 510 and a measurement operation 516 is performed to obtain a measured result of the ancilla qubit,

The right hand side of the circuit diagram 500 shows an alternative implementation of a swap test 518. By rewriting the controlled-swap operations 512 as CNOT gates 520 applied to respective qubits in the first state 502, where a respective qubit in the second state 504 acts as a control for each CNOT gate, Hadamard gates 522 applied to each qubit in the second state 504, measurement operations 524 performed on each qubit in the first stat 502 and second state 504, Toffoli gates 526 applied to an ancilla classical bit, where each Toffoli gate uses a respective qubit in the first state 502 and respective qubit in the second state 514 as controls, and replacing computational basis operations with classical post processing, the swap test can be performed with an ancillary classical bit and without an ancilla qubit (hence the term "ancilla-free" swap test).

Returning to FIG. 3, the system performs a minimax optimization of the quantum generative adversarial network loss function to update the parameters of the quantum generative adversarial network (step 306). The minimax optimization is performed using one or more classical processors. The quantum generative adversarial network loss function is dependent on the discriminator network output - the measured fidelity of the discriminator network input *D_{σ}*(*θ_{d}, ρ*(*θ_{g}*)) - and is equal to one minus the measured fidelity of the discriminator network input, as given by Equation (8) below. ${min}_{{θ}_{g}} {max}_{{θ}_{d}} V \left({θ}_{g}, {θ}_{d}\right) = {min}_{{θ}_{g}} {max}_{{θ}_{d}} \left[1-{D}_{σ}\left({θ}_{d},ρ\left({θ}_{g}\right)\right)\right]$ (8) Performing the minimax optimization of the quantum generative adversarial network loss function includes fixing generator network parameters *θ_{g}* to values determined at a previous iteration (or initial values if the iteration is a first iteration) and maximizing the quantum generative adversarial network loss function with respect to the discriminator network parameters *θ_{d}* to determine updated values of the discriminator network parameters for the iteration, and fixing the discriminator network parameters to the updated values of the discriminator network parameters *θ_{d}* for the iteration and minimizing the quantum generative adversarial network loss function with respect to generator network parameters *θ_{g}* to determine updated values of the generator network parameters for the iteration. That is, the EQGAN architecture adversarially optimizes the generation of the state *ρ*(*θ_{g}*) and the learning of a fidelity measurement *D_{σ}*.

Iteratively adjusting the parameters of the quantum generative adversarial network until a value of the quantum generative adversarial network loss function converges, as described above with reference to steps 302-306, produces trained generator network and discriminator network parameters which define a trained generator network and trained discriminator network. Once trained, the generator network can generate accurate approximations to the target state according to the trained generator network parameters, e.g., as part of a QRAM as described below.

It is now shown that a unique Nash equilibrium exists at the desired location. By definition, 0 ≤ *D_{σ}* (*θ_{d}, ρ*(*θ_{g}*)) ≤ 1 is the probability of measuring state |1〉 at the end of the circuit shown in FIG. 4A or FIG. 5. If the discriminator realizes identity transformation: $U \left({θ}_{d}\right) = I$ the probability of observing state |1〉 is zero. In the first step of discriminator maximization, the discriminator implements a non-trivial entangling operation onto the generator output and true data. Moreover, given a swap test circuit ansatz for *U*(*θ_{d}*)*,* the maximum value for distinguishing between two arbitrary states is uniquely achieved by perfect swap test angles. While the discriminator may not select the swap test, the next step is to minimize *D_{σ}*(*θ_{d}, ρ*(*θ_{g}*)) from the generator side. If the discriminator did not implement a swap test, the generator can select a new arbitrary state that will be distinguished poorly by the discriminator, since it is not using a fidelity comparison. Ultimately, the generator cannot improve if and only if the discriminator uses a swap test, at which point a unique minimum lies at *ρᵢₙ = σ.*

The circuit parameterization *U*(*θ_{d}*) can be chosen based on a variety of factors including the type of device being used to implement the discriminator network, available connectivity within the device, the type of gates that can be efficiently implemented by the device, etc. For example, for a near-term quantum device with planar connectivity, fixed gates or two-qubit entangling gates can be implemented efficiently and can therefore form the circuit parameterization.

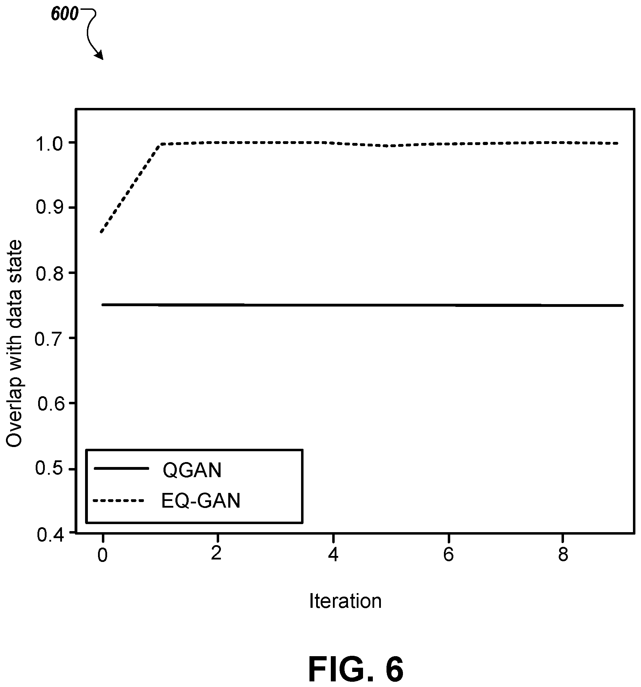

Although a poorly chosen circuit parameterization may yield a non-convex loss function landscape and thus be difficult to optimize by gradient descent, this is an issue shared with the QGAN due to the difficulty of expressing arbitrary unitaries as shallow quantum circuits; similarly, non-convexity in classical GANs often prevents convergence. However, the EQ-GAN architecture successfully converges on problem instances that are unreachable by a fully trained and properly parameterized a QGAN. FIG. 6 is a graph 600 showing a comparison of a QGAN and the presently described EQ-GAN learning a quantum state given by Equation (5). The x-axis represents the number of iterations. The y-axis represents the overlap with the data state. The graph 600 shows that whilst the QGAN indefinitely oscillates between two states of equal fidelity (3/4), the EQ-GAN rapidly converges to full fidelity.

### Learning to suppress errors

An EQ-GAN can achieve improved robustness against gate errors compared to a more straightforward supervised learning approach to learning an unknown quantum state. Rather than adversarially training the parameterized swap test used as a discriminator in EQ-GAN, a perfect swap test could be applied every iteration by a frozen discriminator. This may also cause the generator circuit to converge to the true data, since the swap test ensures a unique global optimum.

However, in the presence of gate errors in the swap test, this unique global optimum will be offset from the true data. Since EQ-GAN is agnostic to the precise parameterization of a perfect swap test, an appropriate ansatz can learn to correct coherent errors observed on near-term quantum hardware. In particular, the gate parameters such as conditional Z phase, single qubit Z phase and swap angles in two-qubit entangling gate can drift and oscillate over the time scale of *O*(10) minutes. Such unknown systematic and time-dependent coherent errors provide significant challenges for applications in quantum machine learning where gradient computation and update requires many measurements.

The large deviations in single qubit and two-qubit Z rotation angles can largely be mitigated by including additional single-qubit Z phase compensations. The effectiveness and importance of such systematic error mitigation is recently demonstrated in the success of achieving the state-of-art accuracy in energy estimation for fermionic molecules. In learning the discriminator circuit that is closest to a true swap test, the adversarial learning of EQ-GAN provides a useful paradigm that may be broadly applicable to improving the fidelity of other near term quantum algorithms.

Suppose the adversarial discriminator unitary is given by *U*(*θ_{d}*), where $U \left({θ}_{d}^{opt}\right)$ corresponds to a perfect swap test in the absence of noise. Given a trace-preserving completely positive noisy channel *ε*, the discriminator is replaced by a new unitary operation *U̅*(*θ_{d}*). While a supervised approach would apply an approximate swap test given by ${U}^{˜} \left({θ}_{d}^{opt}\right)$, the adversarial swap test will generically perform better if there exist parameters ${θ}_{d}^{∗}$ such that ${\left‖{U}^{˜}\left({θ}_{d}^{∗}\right)-U\left({θ}_{d}^{opt}\right)\right‖}_{2} < {\left‖{U}^{˜}\left({θ}_{d}^{opt}\right)-U\left({θ}_{d}^{opt}\right)\right‖}_{2}$. Because the discriminator defines the loss landscape optimized by the generator, the *ρ*(*θ_{g}*) produced by EQ-GAN may converge to a state closer to *σ* than possible by a supervised approach if the parameterization of the noisy unitary U̅is general enough to mitigate errors.

Since the discriminator must converge to a swap test at the optimal Nash equilibrium, convergence may be heuristically improved in the presence of noise via two phases of training. In the first phase, the discriminator is frozen with the parameters of a perfect swap test, although the unitary ${U}^{˜} \left({θ}_{d}^{opt}\right)$ may be an imperfect swap test; the generator is trained until the loss converges. In the second phase of training, the discriminator is allowed to vary adversarially against the generator, seeking the parameters ${θ}_{d}^{∗}$. In the context of gate errors, this second phase may yield a unitary closer to a true swap test.

In other words, performing the minimax optimization of the quantum generative adversarial network loss function can include fixing the discriminator network parameters to values corresponding to a perfect swap test and minimizing the quantum generative adversarial network loss function with respect to generator network parameters to determine initial updated values of the generator network parameters for the iteration, fixing generator network parameters to the initial updated values and maximizing the quantum generative adversarial network loss function with respect to discriminator network parameters to determine updated values of the discriminator network parameters for the iteration, and fixing the discriminator network parameters to the updated values of the discriminator network parameters for the iteration and minimizing the quantum generative adversarial network loss function with respect to generator network parameters to determine updated values of the generator network parameters for the iteration.

As an example, consider the task of learning the superposition state $\frac{1}{√ 2} \left(\left|0\right〉+\left|1\right〉\right)$ on a quantum device with noise. Following the heuristic described above, the EQ-GAN is trained with a frozen discriminator during the first half of training and is trained adversarially during the second half. The discriminator is defined by a swap test with a CZ gate providing the necessary two qubit operation. To learn to correct gate errors, however, the discriminator adversarially learns the angles of single-qubit Z rotations insert directly after the CZ gate. Hence, the EQ-GAN obtains a state overlap significantly better than that of the perfect swap test.

Table I shows the average error after multiple runs of the EQ-GAN and supervised learner on an experimental device.

**Table I**

| QML model | Error in state fidelity |
|---|---|
| Supervised learner | (2.4 ± 0.5) × 10⁻⁴ |
| EQ-GAN | (0.4 ± 0.3) × 10⁻⁴ |

In Table 1, the comparison of EQ-GAN and a supervised learner on a quantum device with 50 qubits, CZ gates and arbitrary single qubit gates shows that the error of the EQ-GAN (i.e. 1- state fidelity w.r.t. true data) is significantly lower than that of the supervised learner, demonstrating the successful adversarial training of an error-suppressed swap test. Uncertainties show two standard deviations.

FIG. 7 shows a first graph 700 plotting comparison of EQ-GAN and a supervised learner implemented on a simulated quantum device and a second graph 750 plotting a comparison of EQ-GAN and a supervised learner implemented on a physical quantum device. In both graphs, the x-axis represents the number of iterations and the y-axis represents the state fidelity with respect to the true data. In simulation, normally distributed noise on single-qubit rotations are applied with a systematic bias away from zero, causing the discriminator of the supervised learner to force convergence to the incorrect state. It is experimentally confirmed that the EQ-GAN converges to a higher state overlap by learning to correct such errors with additional single-qubit rotations. The converged EQ-GAN (dashed line) is determined by the iteration where the discriminator loss reaches an extreme value.

### Application to QRAM

Many quantum machine learning applications require a quantum random access memory (QRAM) to load data in superposition. However, loading an arbitrary state can require noisy controlled rotations and preparing the superposition of an arbitrary set of n states takes *O*(*n*) operations at best. Given a suitable ansatz, an EQ-GAN can be used to learn a state approximately equivalent to the superposition of data. That is, the target quantum state described above with reference to FIG. 3 can be a superposition state representing a superposition of data and once trained, the generator network can be used to generate, according to the trained generator network parameters, the superposition state to approximate a QRAM. If training the EQ-GAN is computationally less costly than the number of calls required of the QRAM in the context of another algorithm, a quantum speedup can be obtained.

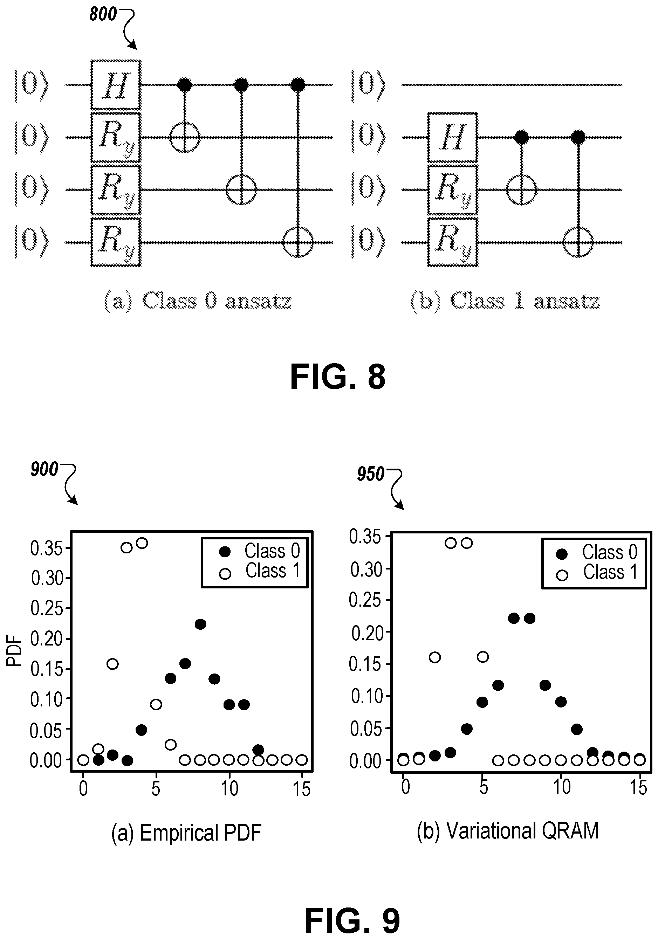

To demonstrate a variational QRAM, a dataset of two peaks sampled from different Gaussian distributions is used. Although exactly encoding the empirical probability density function requires a very deep circuit and multiple-control rotations, shallow circuit ansatzes that generate exponential peaks can be selected. FIG. 8 shows two variational QRAM ansatzes for generating peaks. Class 0 corresponds to a centered peak, and Class 1 corresponds to an offset peak. Once trained to approximate the empirical data distribution, the variational QRAM closely reproduces the original dataset. FIG. 9 shows a two-peak total dataset (sampled from normal distributions, N = 120) and variational QRAM of the training dataset (N = 60). The variational QRAM is obtained by training an EQ-GAN to generate a state p with the shallow peak ansatz to approximate an exact superposition of states *σ*. The training and test datasets (each N = 60) are both balanced between the two classes.

As a proof of principle for using such QRAM in a quantum machine learning context, a quantum neural network can be trained using the above described QRAM and a hinge loss is computed either by considering each data entry individually (encoded as a quantum circuit) or by considering each class individually (encoded as a superposition in variational QRAM). Given the same number of circuit evaluations to compute gradients, the superposition converges to a better accuracy at the end of training despite using an approximate distribution, as shown in Table II below.

**Table II**

| Training data | Accuracy |
|---|---|
| Exact sampling | 53% ± 6% |
| **Variational QRAM** | **69**% ± **2**% |

Table II shows test accuracy (*N* = 60) of a quantum neural network (QNN) either trained on all samples of a training dataset (*N* = 60) for a single epoch or trained on the variational QRAM for an equal number of circuit evaluations. Although the QNN trained on the variational QRAM did not have direct access to the original dataset, accuracy is evaluated on the raw dataset. Uncertainties show two standard deviations.

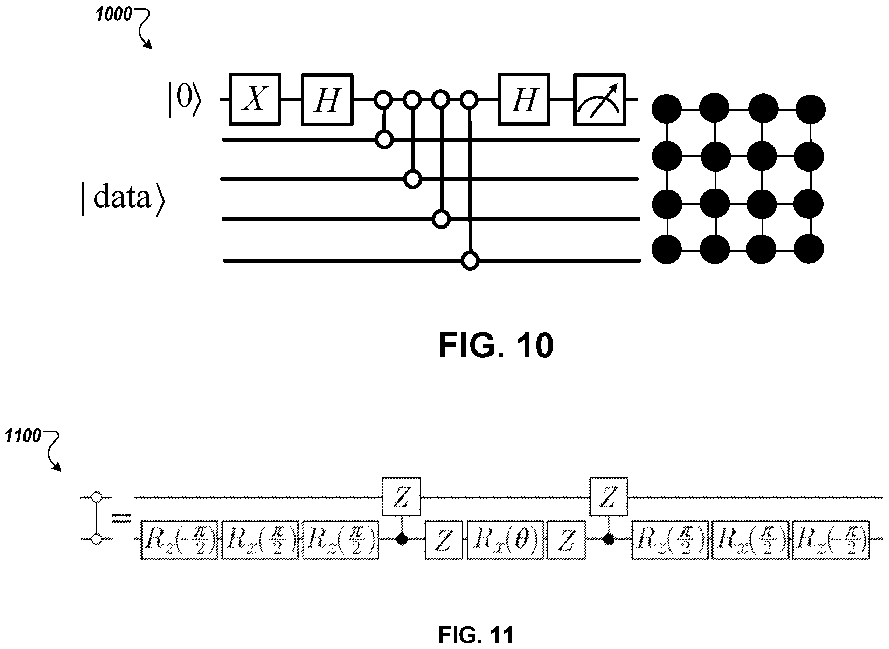

An empirical difference in performance between training a quantum neural network (QNN) with individual examples of a classical dataset and with a superposition of data as obtained from a pre-trained EQ-GAN can be demonstrated. An arbitrary parameterized circuit with single- and two qubit gates can be used to construct a QNN ansatz. Due to the planar connectivity of the quantum device with 50 qubits, CZ gates and arbitrary single qubit gates, the QNN shown in FIG. 10 can be implemented with a four-qubit data state. FIG. 10 shows an example quantum neural network architecture (left) and its corresponding layout on the quantum device (right). A data state of four qubits is constructed with the circuits shown in FIG. 7 and placed in the |*data)* state on the blue qubits. A readout qubit (orange) then performs parameterized two-qubit interactions shown in FIG. 11. To use the native CZ two-qubit gate, a rank-4 entangling gate G given by $G \left(θ\right) = \left(\begin{matrix}1 & 0 & 0 & 0 \\ 0 & {e}^{- i} θ & 0 & 0 \\ 0 & 0 & {e}^{- i} θ & 0 \\ 0 & 0 & 0 & 1\end{matrix}\right)$ (9) is implemented, which can be decomposed as shown in FIG. 11. Instead of using ZZ interactions, as in some conventional proposals, any two-qubit entangling interaction can be freely chosen to construct a parameterized unitary.

FIG. 11 shows a decomposition of the two-qubit entangling gate *G*(*θ*) used in the QNN ansatz given by Equation (9).

The QNN can be trained in two ways - via sampling or via superposition. As described above, the superposition methodology must not use an exact superposition of the training dataset. Instead, it can use a shallow approximation obtained by pre-training an EQ-GAN. For a fair comparison, an equal number of queries to the quantum device is permitted. Consequently, for N = 60 examples with 30 examples per class, training via sampling is performed for 1 epoch with 60 corresponding to 60 iterations performed on the quantum device. However, training via superposition evaluates the superposition of each class 30 times (since there are two classes), also accessing the quantum device for 60 iterations. Additionally, Bayesian optimization is used to tune different learning rates for the sampling and superposition methodologies. In simulation, Adam learning rates from 10⁻⁴ to 10⁻¹ are optimized over with 10 random parameter tries and 40 evaluations of the Gaussian process estimator. For each parameter query, the output of the QNN is averaged over 10 trials to reduce any statistical fluctuations. QNNs using the final learning rates (10^{-3.93} for sampling and 10^{-1.83} for superposition) are then evaluated over 50 trials to obtain the final performance reported in Table II with computed standard deviations.

FIG. 12 depicts an example system 1200 for performing the classical and quantum computations described in this specification. The example system 1200 is an example of a system implemented as classical and quantum computer programs on one or more classical computers and quantum computing devices in one or more locations, in which the systems, components, and techniques described herein can be implemented.

The example system 1200 includes a quantum computing device 1202. The quantum computing device 1202 is used to perform the quantum computation operations described in this specification. The quantum computing device 1202 is intended to represent various forms of quantum computing devices. The components shown here, their connections and relationships, and their functions, are exemplary only, and do not limit the invention defined by the claims.

The quantum computing device 1202 includes a qubit assembly 1252 and a control and measurement system 1204. The qubit assembly includes multiple qubits, e.g., qubit 1206, that are used to perform algorithmic operations or quantum computations. While the qubits shown in FIG. 12 are arranged in a rectangular array, this is a schematic depiction and is not intended to be limiting. The qubit assembly 1252 also includes adjustable coupling elements, e.g., coupler 1208, that allow for interactions between coupled qubits. In the schematic depiction of FIG. 12, each qubit is adjustably coupled to each of its four adjacent qubits by means of respective coupling elements. However, this is an example arrangement of qubits and couplers and other arrangements are possible, including arrangements that are non-rectangular, arrangements that allow for coupling between non-adjacent qubits, and arrangements that include adjustable coupling between more than two qubits.

Each qubit can be a physical two-level quantum system or device having levels representing logical values of 0 and 1. The specific physical realization of the multiple qubits and how they interact with one another is dependent on a variety of factors including the type of the quantum computing device included in example system 1200 or the type of quantum computations that the quantum computing device is performing. For example, in an atomic quantum computer the qubits may be realized via atomic, molecular or solid-state quantum systems, e.g., hyperfine atomic states. As another example, in a superconducting quantum computer the qubits may be realized via superconducting qubits or semi-conducting qubits, e.g., superconducting transmon states. As another example, in a NMR quantum computer the qubits may be realized via nuclear spin states.

In some implementations a quantum computation can proceed by initializing the qubits in a selected initial state and applying a sequence of unitary operators on the qubits. Applying a unitary operator to a quantum state can include applying a corresponding sequence of quantum logic gates to the qubits. Example quantum logic gates include single-qubit gates, e.g., Pauli-X, Pauli-Y, Pauli-Z (also referred to as X, Y, Z), Hadamard gates, S gates, rotations, two-qubit gates, e.g., controlled-X, controlled-Y, controlled-Z (also referred to as CX, CY, CZ), controlled NOT gates (also referred to as CNOT) controlled swap gates (also referred to as CSWAP), and gates involving three or more qubits, e.g., Toffoli gates. The quantum logic gates can be implemented by applying control signals 1210 generated by the control and measurement system 1204 to the qubits and to the couplers.

For example, in some implementations the qubits in the qubit assembly 1252 can be frequency tuneable. In these examples, each qubit can have associated operating frequencies that can be adjusted through application of voltage pulses via one or more drive-lines coupled to the qubit. Example operating frequencies include qubit idling frequencies, qubit interaction frequencies, and qubit readout frequencies. Different frequencies correspond to different operations that the qubit can perform. For example, setting the operating frequency to a corresponding idling frequency may put the qubit into a state where it does not strongly interact with other qubits, and where it may be used to perform single-qubit gates. As another example, in cases where qubits interact via couplers with fixed coupling, qubits can be configured to interact with one another by setting their respective operating frequencies at some gate-dependent frequency detuning from their common interaction frequency. In other cases, e.g., when the qubits interact via tuneable couplers, qubits can be configured to interact with one another by setting the parameters of their respective couplers to enable interactions between the qubits and then by setting the qubit's respective operating frequencies at some gate-dependent frequency detuning from their common interaction frequency. Such interactions may be performed in order to perform multi-qubit gates.

The type of control signals 1210 used depends on the physical realizations of the qubits. For example, the control signals may include RF or microwave pulses in an NMR or superconducting quantum computer system, or optical pulses in an atomic quantum computer system.

A quantum computation can be completed by measuring the states of the qubits, e.g., using a quantum observable such as X or Z, using respective control signals 1210. The measurements cause readout signals 1212 representing measurement results to be communicated back to the measurement and control system 1204. The readout signals 1212 may include RF, microwave, or optical signals depending on the physical scheme for the quantum computing device and/or the qubits. For convenience, the control signals 1210 and readout signals 1212 shown in FIG. 12 are depicted as addressing only selected elements of the qubit assembly (i.e. the top and bottom rows), but during operation the control signals 1210 and readout signals 1212 can address each element in the qubit assembly 1252.

The control and measurement system 1204 is a classical computer system that is used to perform various operations on the qubit assembly 1252, as described above, as well as other classical subroutines or computations. The control and measurement system 1204 includes one or more classical processors, e.g., classical processor 1214, one or more memories, e.g., memory 1216, and one or more I/O units, e.g., I/O unit 1218, connected by one or more data buses. The control and measurement system 1204 can be programmed to send sequences of control signals 1210 to the qubit assembly, e.g. to carry out a selected series of quantum gate operations, and to receive sequences of readout signals 1212 from the qubit assembly, e.g. as part of performing measurement operations.

The processor 1214 is configured to process instructions for execution within the control and measurement system 1204. In some implementations, the processor 1214 is a single-threaded processor. In other implementations, the processor 1214 is a multi-threaded processor. The processor 1214 is capable of processing instructions stored in the memory 1216.

The memory 1216 stores information within the control and measurement system 1204. In some implementations, the memory 1216 includes a computer-readable medium, a volatile memory unit, and/or a non-volatile memory unit. In some cases, the memory 1216 can include storage devices capable of providing mass storage for the system 1204, e.g. a hard disk device, an optical disk device, a storage device that is shared over a network by multiple computing devices (e.g., a cloud storage device), and/or some other large capacity storage device.

The input/output device 1218 provides input/output operations for the control and measurement system 1204. The input/output device 1218 can include D/A converters, A/D converters, and RF/microwave/optical signal generators, transmitters, and receivers, whereby to send control signals 1210 to and receive readout signals 1212 from the qubit assembly, as appropriate for the physical scheme for the quantum computer. In some implementations, the input/output device 1218 can also include one or more network interface devices, e.g., an Ethernet card, a serial communication device, e.g., an RS-232 port, and/or a wireless interface device, e.g., an 802.11 card. In some implementations, the input/output device 1218 can include driver devices configured to receive input data and send output data to other external devices, e.g., keyboard, printer and display devices.

Although an example control and measurement system 1204 has been depicted in FIG. 12, implementations of the subject matter and the functional operations described in this specification can be implemented in other types of digital electronic circuitry, or in computer software, firmware, or hardware, including the structures disclosed in this specification and their structural equivalents, or in combinations of one or more of them.

The example system 1200 includes an example classical processor 150. The classical processor 1250 can be used to perform classical computation operations described in this specification according to some implementations, e.g., the classical machine learning methods described herein.

Implementations of the subject matter and operations described in this specification can be implemented in digital electronic circuitry, analog electronic circuitry, suitable quantum circuitry or, more generally, quantum computational systems, in tangibly-embodied software or firmware, in computer hardware, including the structures disclosed in this specification and their structural equivalents, or in combinations of one or more of them. The term "quantum computational systems" may include, but is not limited to, quantum computers, quantum information processing systems, quantum cryptography systems, or quantum simulators.

Implementations of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, one or more qubits, or a combination of one or more of them. Alternatively or in addition, the program instructions can be encoded on an artificially-generated propagated signal that is capable of encoding digital and/or quantum information, e.g., a machine-generated electrical, optical, or electromagnetic signal, that is generated to encode digital and/or quantum information for transmission to suitable receiver apparatus for execution by a data processing apparatus.

The terms quantum information and quantum data refer to information or data that is carried by, held or stored in quantum systems, where the smallest non-trivial system is a qubit, i.e., a system that defines the unit of quantum information. It is understood that the term "qubit" encompasses all quantum systems that may be suitably approximated as a two-level system in the corresponding context. Such quantum systems may include multi-level systems, e.g., with two or more levels. By way of example, such systems can include atoms, electrons, photons, ions or superconducting qubits. In many implementations the computational basis states are identified with the ground and first excited states, however it is understood that other setups where the computational states are identified with higher level excited states are possible.

The term "data processing apparatus" refers to digital and/or quantum data processing hardware and encompasses all kinds of apparatus, devices, and machines for processing digital and/or quantum data, including by way of example a programmable digital processor, a programmable quantum processor, a digital computer, a quantum computer, multiple digital and quantum processors or computers, and combinations thereof. The apparatus can also be, or further include, special purpose logic circuitry, e.g., an FPGA (field programmable gate array), an ASIC (application-specific integrated circuit), or a quantum simulator, i.e., a quantum data processing apparatus that is designed to simulate or produce information about a specific quantum system. In particular, a quantum simulator is a special purpose quantum computer that does not have the capability to perform universal quantum computation. The apparatus can optionally include, in addition to hardware, code that creates an execution environment for digital and/or quantum computer programs, e.g., code that constitutes processor firmware, a protocol stack, a database management system, an operating system, or a combination of one or more of them.

A digital computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a digital computing environment. A quantum computer program, which may also be referred to or described as a program, software, a software application, a module, a software module, a script, or code, can be written in any form of programming language, including compiled or interpreted languages, or declarative or procedural languages, and translated into a suitable quantum programming language, or can be written in a quantum programming language, e.g., QCL or Quipper.

A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a digital and/or quantum data communication network. A quantum data communication network is understood to be a network that may transmit quantum data using quantum systems, e.g. qubits. Generally, a digital data communication network cannot transmit quantum data, however a quantum data communication network may transmit both quantum data and digital data.

The processes and logic flows described in this specification can be performed by one or more programmable computers, operating with one or more processors, as appropriate, executing one or more computer programs to perform functions by operating on input data and generating output. The processes and logic flows can also be performed by, and apparatus can also be implemented as, special purpose logic circuitry, e.g., an FPGA or an ASIC, or a quantum simulator, or by a combination of special purpose logic circuitry or quantum simulators and one or more programmed digital and/or quantum computers.

For a system of one or more computers to be "configured to" perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For example, a quantum computer may receive instructions from a digital computer that, when executed by the quantum computing apparatus, cause the apparatus to perform the operations or actions.

Computers suitable for the execution of a computer program can be based on general or special purpose processors, or any other kind of central processing unit. Generally, a central processing unit will receive instructions and data from a read-only memory, a random access memory, or quantum systems suitable for transmitting quantum data, e.g. photons, or combinations thereof.

The elements of a computer include a central processing unit for performing or executing instructions and one or more memory devices for storing instructions and digital, analog, and/or quantum data. The central processing unit and the memory can be supplemented by, or incorporated in, special purpose logic circuitry or quantum simulators. Generally, a computer will also include, or be operatively coupled to receive data from or transfer data to, or both, one or more mass storage devices for storing data, e.g., magnetic, magneto-optical disks, optical disks, or quantum systems suitable for storing quantum information. However, a computer need not have such devices.

Quantum circuit elements (also referred to as quantum computing circuit elements) include circuit elements for performing quantum processing operations. That is, the quantum circuit elements are configured to make use of quantum-mechanical phenomena, such as superposition and entanglement, to perform operations on data in a non-deterministic manner. Certain quantum circuit elements, such as qubits, can be configured to represent and operate on information in more than one state simultaneously. Examples of superconducting quantum circuit elements include circuit elements such as quantum LC oscillators, qubits (e.g., flux qubits, phase qubits, or charge qubits), and superconducting quantum interference devices (SQUIDs) (e.g., RF-SQUID or DC-SQUID), among others.

In contrast, classical circuit elements generally process data in a deterministic manner. Classical circuit elements can be configured to collectively carry out instructions of a computer program by performing basic arithmetical, logical, and/or input/output operations on data, in which the data is represented in analog or digital form. In some implementations, classical circuit elements can be used to transmit data to and/or receive data from the quantum circuit elements through electrical or electromagnetic connections. Examples of classical circuit elements include circuit elements based on CMOS circuitry, rapid single flux quantum (RSFQ) devices, reciprocal quantum logic (RQL) devices and ERSFQ devices, which are an energy-efficient version of RSFQ that does not use bias resistors.

In certain cases, some or all of the quantum and/or classical circuit elements may be implemented using, e.g., superconducting quantum and/or classical circuit elements. Fabrication of the superconducting circuit elements can entail the deposition of one or more materials, such as superconductors, dielectrics and/or metals. Depending on the selected material, these materials can be deposited using deposition processes such as chemical vapor deposition, physical vapor deposition (e.g., evaporation or sputtering), or epitaxial techniques, among other deposition processes. Processes for fabricating circuit elements described herein can entail the removal of one or more materials from a device during fabrication. Depending on the material to be removed, the removal process can include, e.g., wet etching techniques, dry etching techniques, or lift-off processes. The materials forming the circuit elements described herein can be patterned using known lithographic techniques (e.g., photolithography or e-beam lithography).

During operation of a quantum computational system that uses superconducting quantum circuit elements and/or superconducting classical circuit elements, such as the circuit elements described herein, the superconducting circuit elements are cooled down within a cryostat to temperatures that allow a superconductor material to exhibit superconducting properties. A superconductor (alternatively superconducting) material can be understood as material that exhibits superconducting properties at or below a superconducting critical temperature. Examples of superconducting material include aluminum (superconductive critical temperature of 1.2 kelvin) and niobium (superconducting critical temperature of 9.3 kelvin). Accordingly, superconducting structures, such as superconducting traces and superconducting ground planes, are formed from material that exhibits superconducting properties at or below a superconducting critical temperature.

In certain implementations, control signals for the quantum circuit elements (e.g., qubits and qubit couplers) may be provided using classical circuit elements that are electrically and/or electromagnetically coupled to the quantum circuit elements. The control signals may be provided in digital and/or analog form.

Computer-readable media suitable for storing computer program instructions and data include all forms of non-volatile digital and/or quantum memory, media and memory devices, including by way of example semiconductor memory devices, e.g., EPROM, EEPROM, and flash memory devices; magnetic disks, e.g., internal hard disks or removable disks; magneto-optical disks; CD-ROM and DVD-ROM disks; and quantum systems, e.g., trapped atoms or electrons. It is understood that quantum memories are devices that can store quantum data for a long time with high fidelity and efficiency, e.g., light-matter interfaces where light is used for transmission and matter for storing and preserving the quantum features of quantum data such as superposition or quantum coherence.

Control of the various systems described in this specification, or portions of them, can be implemented in a computer program product that includes instructions that are stored on one or more non-transitory machine-readable storage media, and that are executable on one or more processing devices. The systems described in this specification, or portions of them, can each be implemented as an apparatus, method, or system that may include one or more processing devices and memory to store executable instructions to perform the operations described in this specification.

While this specification contains many specific implementation details, these should not be construed as limitations on the scope of protection defined by the claims, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations, one or more features from a combination can in some cases be excised from the combination, and the combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. As one example, the processes depicted in the accompanying figures do not necessarily require the particular order shown, or sequential order, to achieve desirable results. In some cases, multitasking and parallel processing may be advantageous.

## Claims

1. A method for training a quantum generative adversarial network to learn a target quantum state, the method being performed by one or more quantum computers (1202), each comprising a plurality of physical qubits (1252), and by one or more classical processors (1250), the method comprising:
iteratively adjusting parameters of the quantum generative adversarial network (200) until a value of a quantum generative adversarial network loss function converges,
wherein the quantum generative adversarial network comprises a generator network (204) comprising quantum hardware of the one or more quantum computers that is configured to apply a first parameterized quantum circuit to an initial quantum state to output a first quantum state (210) that approximates the target quantum state, and a discriminator network (206) comprising quantum hardware of the one or more quantum computers that is configured to receive a discriminator network input and perform an entangling operation on the discriminator input by applying second parameterized quantum circuit to the discriminator input;
wherein each iteration comprises:
performing (304), by the quantum hardware of the one or more quantum computers, an entangling operation (214) on the discriminator network input of the discriminator network in the quantum generative adversarial network to measure a fidelity (212) of the discriminator network input, wherein the discriminator network input comprises the target quantum state and the first quantum state output from the generator network in the quantum generative adversarial network; and
performing (306), by the one or more classical processors, a minimax optimization of the quantum generative adversarial network loss function to update the parameters of the quantum generative adversarial network, wherein the quantum generative adversarial network loss function is dependent on the measured fidelity of the discriminator network input.

2. The method of claim 1, wherein each iteration further comprises:
processing (302), by the generator network (204), an initial quantum state to output the first quantum state (210), the processing comprising applying a first quantum circuit to the initial quantum state, wherein i) the first quantum circuit is a parameterized quantum circuit and first quantum circuit parameters constitute parameters of the generator network included in the parameters of the quantum generative adversarial network.

3. The method of any one of claims 1 to 3, wherein the entangling operation (214) comprises an ancilla-free swap test.

4. The method of any one of claims 1 to 3, wherein the quantum generative adversarial network loss function comprises one minus the measured fidelity (212) of the discriminator network input.

5. The method of any one of claims 1 to 4, wherein performing (306), by the one or more classical processors, the minimax optimization of the quantum generative adversarial network loss function comprises:
fixing generator network (204) parameters to values determined at a previous iteration and maximizing the quantum generative adversarial network loss function with respect to discriminator network (206) parameters to determine updated values of the discriminator network parameters for the iteration; and
fixing the discriminator network parameters to the updated values of the discriminator network parameters for the iteration and minimizing the quantum generative adversarial network loss function with respect to generator network parameters to determine updated values of the generator network parameters for the iteration.

6. The method of any one of claims 1 to 5, wherein performing (306), by the one or more classical processors, the minimax optimization of the quantum generative adversarial network loss function comprises:
fixing the discriminator network (206) parameters to values corresponding to a perfect swap test and minimizing the quantum generative adversarial network loss function with respect to generator network (204) parameters to determine initial updated values of the generator network parameters for the iteration;
fixing generator network parameters to the initial updated values and maximizing the quantum generative adversarial network loss function with respect to discriminator network parameters to determine updated values of the discriminator network parameters for the iteration; and
fixing the discriminator network parameters to the updated values of the discriminator network parameters for the iteration and minimizing the quantum generative adversarial network loss function with respect to generator network parameters to determine updated values of the generator network parameters for the iteration.

7. The method of any one of claims 1 to 6, wherein the target quantum state comprises a superposition state and wherein the method further comprises generating, by the generator network (204) and according to trained generator network parameters, the target quantum state.

8. The method of claim 7, further comprising training a quantum neural network using the generated target quantum state.

9. The method of any one of claims 1 to 8, wherein iteratively adjusting the parameters of the quantum generative adversarial network (200) until a value of the quantum generative adversarial network loss function converges produces trained generator network parameters and trained discriminator network parameters, and wherein the method further comprises generating the target state using the generator network and according to the trained generator network parameters.

10. The method of any one of claims 1 to 9, wherein performing (306), by the one or more classical processors, the minimax optimization of the quantum generative adversarial network loss function to update the parameters of the quantum generative adversarial network comprises performing multiple circuit evaluations to compute gradients of the parameters of the quantum generative adversarial network.

11. A system comprising:
a quantum computing device (1202) comprising a qubit assembly (1252); and
a classical computer system comprising a control and measurement system (1204),
the system being configured to perform the method of any preceding claim.

## Patentansprüche

1. Verfahren zum Trainieren eines generativen kontradiktorischen Quantennetzwerks zum Erlernen eines Zielquantenzustands, wobei das Verfahren von einem oder mehreren Quantencomputern (1202), die jeweils eine Mehrzahl von physikalischen Qubits (1252) umfassen, und von einem oder mehreren klassischen Prozessoren (1250) durchgeführt wird, wobei das Verfahren umfasst:
iteratives Anpassen von Parametern des generativen kontradiktorischen Quantennetzwerks (200), bis ein Wert einer Verlustfunktion des generativen kontradiktorischen Quantennetzwerks konvergiert,
wobei das generative kontradiktorische Quantennetzwerk ein Generatornetzwerk (204) umfasst, das Quantenhardware des einen oder der mehreren Quantencomputer umfasst, die dazu konfiguriert ist, einen ersten parametrisierten Quantenschaltkreis auf einen anfänglichen Quantenzustand anzuwenden, um einen ersten Quantenzustand (210) auszugeben,
der den Zielquantenzustand approximiert, und ein Diskriminatornetzwerk (206), das Quantenhardware des einen oder der mehreren Quantencomputer umfasst, die dazu konfiguriert ist, eine Diskriminatornetzwerkeingabe zu empfangen und eine Verschränkungsoperation an der Diskriminatoreingabe durchzuführen, indem ein zweiter parametrisierter Quantenschaltkreis auf die Diskriminatoreingabe angewendet wird;
wobei jede Iteration Folgendes umfasst:
Durchführen (304), durch die Quantenhardware des einen oder der mehreren Quantencomputer, einer Verschränkungsoperation (214) an der Diskriminatornetzwerkeingabe des Diskriminatornetzwerks in dem generativen kontradiktorischen Quantennetzwerk, um eine Fidelität (212) der Diskriminatornetzwerkeingabe zu messen, wobei die Diskriminatornetzwerkeingabe den Zielquantenzustand und den von dem Generatornetzwerk in dem generativen kontradiktorischen Quantennetzwerk ausgegebenen ersten Quantenzustand umfasst; und
Durchführen (306), durch den einen oder die mehreren klassischen Prozessoren, einer Minimax-Optimierung der Verlustfunktion des generativen kontradiktorischen Quantennetzwerks, um die Parameter des generativen kontradiktorischen Quantennetzwerks zu aktualisieren, wobei die Verlustfunktion des generativen kontradiktorischen Quantennetzwerks von der gemessenen Fidelität der Diskriminatornetzwerkeingabe abhängt.

2. Verfahren nach Anspruch 1, wobei jede Iteration ferner Folgendes umfasst:
Verarbeiten (302), durch das Generatornetzwerk (204), eines anfänglichen Quantenzustands, um den ersten Quantenzustand (210) auszugeben, wobei das Verarbeiten das Anwenden eines ersten Quantenschaltkreises auf den anfänglichen Quantenzustand umfasst, wobei i) der erste Quantenschaltkreis ein parametrisierter Quantenschaltkreis ist und erste Quantenschaltkreisparameter Parameter des Generatornetzwerks bilden, die in den Parametern des generativen kontradiktorischen Quantennetzwerks enthalten sind.

3. Verfahren nach einem der Ansprüche 1 bis 3, wobei die Verschränkungsoperation (214) einen ancillafreien Swap-Test umfasst.

4. Verfahren nach einem der Ansprüche 1 bis 3, wobei die Verlustfunktion des generativen kontradiktorischen Quantennetzwerks eins minus der gemessenen Fidelität (212) der Diskriminatornetzwerkeingabe umfasst.

5. Verfahren nach einem der Ansprüche 1 bis 4, wobei das Durchführen (306), durch den einen oder die mehreren klassischen Prozessoren, der Minimax-Optimierung der Verlustfunktion des generativen kontradiktorischen Quantennetzwerks Folgendes umfasst:
Festlegen von Parametern des Generatornetzwerks (204) auf Werte, die in einer vorherigen Iteration bestimmt wurden, und Maximieren der Verlustfunktion des generativen kontradiktorischen Quantennetzwerks in Bezug auf Parameter des Diskriminatornetzwerks (206), um aktualisierte Werte der Diskriminatornetzwerkparameter für die Iteration zu bestimmen; und
Festlegen der Diskriminatornetzwerkparameter auf die aktualisierten Werte der Diskriminatornetzwerkparameter für die Iteration und Minimieren der Verlustfunktion des generativen kontradiktorischen Quantennetzwerks in Bezug auf Generatornetzwerkparameter, um aktualisierte Werte der Generatornetzwerkparameter für die Iteration zu bestimmen.

6. Verfahren nach einem der Ansprüche 1 bis 5, wobei das Durchführen (306), durch den einen oder die mehreren klassischen Prozessoren, der Minimax-Optimierung der Verlustfunktion des generativen kontradiktorischen Quantennetzwerks Folgendes umfasst:
Festlegen der Parameter des Diskriminatornetzwerks (206) auf Werte, die einem perfekten Swap-Test entsprechen, und Minimieren der Verlustfunktion des generativen kontradiktorischen Quantennetzwerks in Bezug auf Parameter des Generatornetzwerks (204), um anfängliche aktualisierte Werte der Generatornetzwerkparameter für die Iteration zu bestimmen; Festlegen von Generatornetzwerkparametern auf die anfänglichen aktualisierten Werte und Maximieren der Verlustfunktion des generativen kontradiktorischen Quantennetzwerks in Bezug auf Diskriminatornetzwerkparameter, um aktualisierte Werte der Diskriminatornetzwerkparameter für die Iteration zu bestimmen; und
Festlegen der Diskriminatornetzwerkparameter auf die aktualisierten Werte der Diskriminatornetzwerkparameter für die Iteration und Minimieren der Verlustfunktion des generativen kontradiktorischen Quantennetzwerks in Bezug auf Generatornetzwerkparameter, um aktualisierte Werte der Generatornetzwerkparameter für die Iteration zu bestimmen.

7. Verfahren nach einem der Ansprüche 1 bis 6, wobei der Zielquantenzustand einen Superpositionszustand umfasst und wobei das Verfahren ferner das Erzeugen des Zielquantenzustands durch das Generatornetzwerk (204) und gemäß trainierten Generatornetzwerkparametern umfasst.

8. Verfahren nach Anspruch 7, ferner umfassend das Trainieren eines neuronalen Quantennetzes unter Verwendung des erzeugten Zielquantenzustands.

9. Verfahren nach einem der Ansprüche 1 bis 8, wobei das iterative Anpassen der Parameter des generativen kontradiktorischen Quantennetzwerks (200), bis ein Wert der Verlustfunktion des generativen kontradiktorischen Quantennetzwerks konvergiert, trainierte Generatornetzwerkparameter und trainierte Diskriminatornetzwerkparameter erzeugt, und wobei das Verfahren ferner das Erzeugen des Zielzustands unter Verwendung des Generatornetzwerks und gemäß den trainierten Generatornetzwerkparametern umfasst.

10. Verfahren nach einem der Ansprüche 1 bis 9, wobei das Durchführen (306), durch den einen oder die mehreren klassischen Prozessoren, der Minimax-Optimierung der Verlustfunktion des generativen kontradiktorischen Quantennetzwerks zum Aktualisieren der Parameter des generativen kontradiktorischen Quantennetzwerks das Durchführen mehrerer Schaltkreisauswertungen umfasst, um Gradienten der Parameter des generativen kontradiktorischen Quantennetzwerks zu berechnen.

11. System, umfassend:
eine Quantenrechenvorrichtung (1202), die eine Qubit-Anordnung (1252) umfasst; und
ein klassisches Computersystem, das ein Steuerungs- und Messsystem (1204) umfasst,
wobei das System dazu konfiguriert ist, das Verfahren nach einem der vorhergehenden Ansprüche durchzuführen.

## Revendications

1. Procédé d'entraînement d'un réseau antagoniste génératif quantique pour apprendre un état quantique cible, le procédé étant réalisé par un ou plusieurs ordinateurs quantiques (1202), chacun comprenant une pluralité de qubits physiques (1252), et par un ou plusieurs processeurs classiques (1250), le procédé comprenant :
le réglage itératif de paramètres du réseau antagoniste génératif quantique (200) jusqu'à ce qu'une valeur d'une fonction de perte du réseau antagoniste génératif quantique converge,
dans lequel le réseau antagoniste génératif quantique comprend un réseau générateur (204) comprenant du matériel quantique du ou des ordinateurs quantiques qui est configuré pour appliquer un premier circuit quantique paramétré à un état quantique initial afin de produire un premier état quantique (210) qui se rapproche de l'état quantique cible, et un réseau discriminateur (206) comprenant du matériel quantique du ou des ordinateurs quantiques qui est configuré pour recevoir une entrée du réseau discriminateur et réaliser une opération d'intrication sur l'entrée de discriminateur en appliquant un second circuit quantique paramétré à l'entrée de discriminateur ;
dans lequel chaque itération comprend :
la réalisation (304), par le matériel quantique du ou des ordinateurs quantiques, d'une opération d'intrication (214) sur l'entrée du réseau discriminateur du réseau discriminateur dans le réseau antagoniste génératif quantique afin de mesurer une fidélité (212) de l'entrée du réseau discriminateur, dans lequel l'entrée du réseau discriminateur comprend l'état quantique cible et le premier état quantique produit par le réseau générateur dans le réseau antagoniste génératif quantique ; et la réalisation (306), par le ou les processeurs classiques, d'une optimisation minimax de la fonction de perte du réseau antagoniste génératif quantique pour mettre à jour les paramètres du réseau antagoniste génératif quantique, dans lequel la fonction de perte du réseau antagoniste génératif quantique dépend de la fidélité mesurée de l'entrée du réseau discriminateur.

2. Procédé selon la revendication 1, dans lequel chaque itération comprend en outre :
le traitement (302), par le réseau générateur (204), d'un état quantique initial pour produire le premier état quantique (210), le traitement comprenant l'application d'un premier circuit quantique à l'état quantique initial, dans lequel i) le premier circuit quantique est un circuit quantique paramétré et les paramètres du premier circuit quantique constituent des paramètres du réseau générateur compris dans les paramètres du réseau antagoniste génératif quantique.

3. Procédé selon l'une quelconque des revendications 1 à 3, dans lequel l'opération d'intrication (214) comprend un test d'échange sans auxiliaire.

4. Procédé selon l'une quelconque des revendications 1 à 3, dans lequel la fonction de perte du réseau antagoniste génératif quantique comprend un moins la fidélité mesurée (212) de l'entrée du réseau discriminateur.

5. Procédé selon l'une quelconque des revendications 1 à 4, dans lequel la réalisation (306), par le ou les processeurs classiques, de l'optimisation minimax de la fonction de perte du réseau antagoniste génératif quantique comprend :
la fixation des paramètres du réseau générateur (204) à des valeurs déterminées lors d'une itération précédente et la maximisation de la fonction de perte du réseau antagoniste génératif quantique par rapport aux paramètres du réseau discriminateur (206) afin de déterminer des valeurs mises à jour des paramètres du réseau discriminateur pour l'itération ; et la fixation des paramètres du réseau discriminateur aux valeurs mises à jour des paramètres du réseau discriminateur pour l'itération et la minimisation de la fonction de perte du réseau antagoniste génératif quantique par rapport aux paramètres du réseau générateur afin de déterminer des valeurs mises à jour des paramètres du réseau générateur pour l'itération.

6. Procédé selon l'une quelconque des revendications 1 à 5, dans lequel la réalisation (306), par le ou les processeurs classiques, de l'optimisation minimax de la fonction de perte du réseau antagoniste génératif quantique comprend :
la fixation des paramètres du réseau discriminateur (206) à des valeurs correspondant à un test d'échange parfait et la minimisation de la fonction de perte du réseau antagoniste génératif quantique par rapport aux paramètres du réseau générateur (204) afin de déterminer des valeurs mises à jour initiales des paramètres du réseau générateur pour l'itération ; la fixation des paramètres du réseau générateur aux valeurs mises à jour initiales et la maximisation de la fonction de perte du réseau antagoniste génératif quantique par rapport aux paramètres du réseau discriminateur afin de déterminer des valeurs mises à jour des paramètres du réseau discriminateur pour l'itération ; et
la fixation des paramètres du réseau discriminateur aux valeurs mises à jour des paramètres du réseau discriminateur pour l'itération et la minimisation de la fonction de perte du réseau antagoniste génératif quantique par rapport aux paramètres du réseau générateur afin de déterminer des valeurs mises à jour des paramètres du réseau générateur pour l'itération.

7. Procédé selon l'une quelconque des revendications 1 à 6, dans lequel l'état quantique cible comprend un état de superposition et dans lequel le procédé comprend en outre la génération, par le réseau générateur (204) et selon des paramètres entraînés du réseau générateur, de l'état quantique cible.

8. Procédé selon la revendication 7, comprenant en outre l'entraînement d'un réseau neuronal quantique à l'aide de l'état quantique cible généré.

9. Procédé selon l'une quelconque des revendications 1 à 8, dans lequel le réglage itératif des paramètres du réseau antagoniste génératif quantique (200) jusqu'à ce qu'une valeur de la fonction de perte du réseau antagoniste génératif quantique converge produit des paramètres entraînés du réseau générateur et des paramètres entraînés du réseau discriminateur, et dans lequel le procédé comprend en outre la génération de l'état cible à l'aide du réseau générateur et selon les paramètres entraînés du réseau générateur.

10. Procédé selon l'une quelconque des revendications 1 à 9, dans lequel la réalisation (306), par le ou les processeurs classiques, de l'optimisation minimax de la fonction de perte du réseau antagoniste génératif quantique pour mettre à jour les paramètres du réseau antagoniste génératif quantique, comprend la réalisation de multiples évaluations de circuit afin de calculer les gradients des paramètres du réseau antagoniste génératif quantique.

11. Système comprenant :
un dispositif informatique quantique (1202) comprenant un ensemble de qubits (1252) ; et
un système informatique classique comprenant un système de commande et de mesure (1204),
le système étant configuré pour réaliser le procédé selon une quelconque revendication précédente.
